# EUROPÄISCHE PATENTSCHRIFT

(11) **EP 1 047 700 B1**
(45) Veröffentlichungstag und Bekanntmachung des Hinweises auf die Patenterteilung: **08.10.2003**
(21) Anmeldenummer: 98967069.0
(22) Anmeldetag: 17.11.1998
(51) Int. Cl.: C07F 9/30

(54) **VERFAHREN ZUR HERSTELLUNG VON SALZEN DER DIALKYLPHOSPHINSÄUREN**
METHOD FOR PRODUCING SALTS OF DIALKYLPHOSPHINIC ACIDS
PROCEDE DE PREPARATION DE SELS D'ACIDES DIALKYLPHOSPHINIQUES

(30) Priorität: 28.11.1997 DE 19752735; 10.11.1998 DE 19851729
(43) Veröffentlichungstag der Anmeldung: 02.11.2000
(73) Patentinhaber: Clariant GmbH, 65929 Frankfurt am Main (DE)
(72) Erfinder: WEFERLING, Norbert, 50354 Hürth (DE); SCHMITZ, Hans-Peter, 50321 Brühl (DE); KOLBE, Günter Poststrasse 33, 50169 Kerpen (DE)
(86) Internationale Anmeldenummer: EP9807350
(87) Internationale Veröffentlichungsnummer: WO99028327

(56) Entgegenhaltungen:
- FR-A- 1 558 606
- US-A- 2 957 931
- E.E. NIFANT'EV: "Acid catalysis in the hydrophosphorylation of olefins" JOURNAL OF GENERAL CHEMISTRY USSR., Bd. 50, Nr. 8/1, - August 1980 Seiten 1416-1423, XP002093427 NEW YORK US
- E.E. NIFANT'EV: "Hydrophosphorylation of cyclopentenes" JOURNAL OF GENERAL CHEMISTRY USSR., Bd. 61, Nr. 1/1, - Januar 1991 Seiten 83-92, XP002093428 NEW YORK US
- CHEMICAL ABSTRACTS, vol. 69, no. 16, 14. Oktober 1968 Columbus, Ohio, US; abstract no. 067487, Seite 6310; Spalte 2; XP002093429 & PETROV K.A.: "Dialkylphosphinic acids" KHIM. ORG. SOEDIN. FOSFORA, AKAD. NAUK SSSR, OTD. OBSHCH. TEKH. KHIM.,1967, Seiten 181-186, SU
- WILLIAM C. DRINKARD: "Some salts of symmetric phosphinic acids" JOURNAL OF THE AMERICAN CHEMICAL SOCIETY., Bd. 74, Nr. 21, - 5. November 1952 Seiten 5520-5521, XP002093391 DC US

## Beschreibung

Die Erfindung betrifft ein Verfahren zur Herstellung von Salzen der Dialkylphosphinsäuren sowie die Verwendung der nach diesem Verfahren hergestellten Salze der Dialkylphosphinsäuren.

Aluminiumsalze von organischen Phosphorsäuren sind als Flammschutzmittel bekannt. Sie können nach verschiedenen Verfahren hergestellt werden.

Die EP-A-0 299 922 beschreibt ein Verfahren zur Herstellung von Aluminiumsalzen von Phosphor- und Phosphonsäureestern durch Umsetzung von Aluminium mit Phosphorsäure, Phosphonsäure oder eines Esters davon.

Bei dem in der EP-A-0 245 207 beschriebenen Verfahren werden Aluminiumverbindungen mit Alkylphosphonsäurediestern zum entsprechenden Aluminiumsalz umgesetzt.

Nach der EP-A-0 327 496 führt die Umsetzung von Aluminiumhydroxid mit Alkylphosphonsäurediestern in Abwesenheit von Wasser bei ca. 180 °C ebenfalls zu Aluminiumsalzen der Phosphonsäurehalbester.

Die EP-A-0 699 708 beschreibt flammgeschützte Polyesterformmassen, wobei die Polyester durch den Zusatz von Calcium- oder Aluminiumsalzen von Phosphin- oder Diphosphinsäuren flammfest ausgerüstet werden. Die vorgenannten Salze werden durch Umsetzung des entsprechenden Dialkylphosphinsäuren mit Calcium- oder Aluminiumhydroxid erhalten.

Die DE 24 47 727 beschreibt schwerentflammbare Polyamidformmassen, die ein Salz einer Phosphinsäure oder einer Diphosphinsäure enthalten.

Die vorgenannten Verfahren weisen jedoch den Nachteil auf, daß die geeigneten organischen Phosphorverbindungen zunächst auf umständliche Art und Weise hergestellt werden müssen. Dies trifft insbesondere für die Dialkylphosphinsäuren zu, deren Aluminiumsalze in der Anwendung als Flammschutzmittel die besten Resultate liefern, und für die ebenfalls einige Synthesewege beschrieben sind.

So beschieibt die DE 21 00 779 A1 ein Verfahren zur Herstellung von von Dialkylphosphinsäurealkylestern durch Addition von Olefinen mit 2 bis 22 Kohlenstoffatomen an Alkylphosphonigsäureester.

Auch hier fehlt es bisher an einer wirtschaftlichen Synthesemöglichkeit, die zu homogenen Produkten in hoher Ausbeute führt.

Der Erfindung liegt daher die Aufgabe zugrunde, ein Verfahren zur Herstellung von Salzen der Dialkylphosphinsäuren zur Verfügung zu stellen, bei dem sich auf besonders einfache und wirtschaftliche Art und Weise sowohl die Dialkylphosphinsäuren bzw. ihre Alkalisalze als auch die gewünschten Endprodukte, nämlich Dialkylphosphinsäuresalze von bestimmten Metallen, herstellen lassen.

Diese Aufgabe wird gelöst durch ein Verfahren der eingangs beschriebenen Art, dadurch gekennzeichnet, daß man
a) Alkylphosphonige und/oder Hypophosphorige Säure und/oder deren Alkalisalze mit den Olefinen Ethylen und/oder Propylen in Gegenwart einer Azoverbindung als Radikalstarter zu Dialkylphosphinsäuren und/oder deren Alkalisalzen umsetzt und
b) die nach a) erhaltenen Dialkylphosphinsäuren und/oder deren Alkalisalze mit Metallverbindungen von Mg, Ca, Al, Sb, Sn, Ge, Ti, Zn, Fe, Zr, Ce, Bi, Sr, Mn, Li, Na und/oder K zu den Dialkylphosphinsäuresalzen der Metalle umsetzt.
und wobei die Umsetzungen im Schritt a) in essigsaurem Medium erfolgen.

Bevorzugt handelt es sich bei den Azo-Verbindungen um kationische und/oder nicht-kationische Azo-Verbindungen.

Bevorzugt werden als kationische Azo-Verbindungen 2,2'-Azobis(2-amidinopropan)-dihydrochlorid oder 2,2'-Azobis(N,N'-dimethylenisobutyramidin)dihydrochlorid eingesetzt.

Bevorzugt werden als nicht-kationische Azo-Verbindungen Azobis(isobutyronitril), 4,4'Azobis(4-cyano-pentansäure) oder 2,2'Azobis(2-methylbutyronitril) eingesetzt.

Bevorzugt handelt sich bei den Metallverbindungen um Metalloxide, -hydroxide, -oxidhydroxide, -sulfate, -acetate, -nitrate, -chloride und/oder -alkoxide.

Besonders bevorzugt handelt es sich bei den Metallverbindungen um Aluminiumhydroxid oder um Aluminiumsulfate.

Bevorzugt setzt man
a) Alkalisalze der Hypophosphorigen Säure mit den Olefinen Ethylen und/oder Propylen in Gegenwart einer kationischen Azoverbindung als Radikalstarter zu den Alkalisalzen von Dialkylphosphinsäuren und
b) die nach a) erhaltenen Alkalisalze der Dialkylphosphinsäuren mit Aluminiumverbindungen zu den Dialkylphosphinsäuresalzen des Aluminiums um. wobei die Umsetzungen im Schritt a) in essigsaurem Medium erfolgen.

Anstelle der Alkalisalze der Hypophosphorigen Säure läßt sich problemlos ebenso eine wäßrige Lösung der freien Säure einsetzen.

Bevorzugt wird das nach Schritt a) erhaltene Produktgemisch ohne weitere Reinigung mit den Metallverbindungen umgesetzt.

In einer weiteren Ausführungsform des Verfahrens wird das nach Schritt a) erhaltene Produktgemisch aufgearbeitet und danach nur die nach Schritt a) erhaltenen Dialkylphosphinsäuren und/oder deren Alkalisalze mit den Metallverbindungen umgesetzt.

Bevorzugt handelt es sich bei der Alkylphosphonigen Säure und/oder deren Alkalisalze um Methylphosphonige Säure oder Ethylphosphonige Säure und/oder deren Alkalisalze.

Bevorzugt erfolgt die Umsetzung im Schritt a) bei einer Temperatur von 40 bis 130 °C.

Besonders bevorzugt erfolgt die Umsetzung im Schritt a) bei einer Temperatur von 70 bis 110 °C.

Bevorzugt erfolgt die Umsetzung im Schritt b) bei einer Temperatur von 20 bis 150 °C.

Besonders bevorzugt die Umsetzung im Schritt b) bei einer Temperatur von 80 bis 120 °C.

Bevorzugt erfolgt die Umsetzung im Schritt b) in essigsaurem Medium.

Im Schritt b) ist auch die Umsetzung im wäßrigem Medium bevorzugt.

Dabei erfolgt die Umsetzung im Schritt b) nach Einstellung eines für das jeweilige System Dialkylphosphinsäure/Metallverbindung optimalen pH-Bereichs für die Salzfällung.

Der Gegenstand der vorliegenden Erfindung umfaßt insbesondere auch ein Verfahren, bei dem man Natriumhypophosphit mit Ethylen in Gegenwart einer kationischen oder nicht-kationischen Azoverbindung als Radikalstarter zum Natriumsalz der Diethylphosphinsäure als Hauptprodukt umsetzt.

Dieses Produkt wird anschließend erfindungsgemäß mit Aluminumhydroxid oder einem Aluminiumsulfat zum Aluminiumsalz der Diethylphosphinsäure umgesetzt.

Die Erfindung betrifft auch die Verwendung der nach dem erfindungsgemäßen Verfahren hergestellten Dialkylphosphinsäuresalze der Metalle zur Herstellung von Flammschutzmitteln.

Insbesondere betrifft die Erfindung die Verwendung der erfmdungsgemäß hergestellten Dialkylphosphinsäuresalze der Metalle zur Herstellung von Flammschutzmitteln für thermoplastische Polymere wie Polyethylenterephthalat, Polybutylenterephthalat, Polystyrol oder Polyamid und für Duroplaste.

Schließlich betrifft die Erfindung auch die Verwendung der nach dem erfindungsgemäßen Verfahren hergestellten Dialkylphosphinsäuresalze der Metalle als Additive in polymeren Formmassen.

Die Erfindung wird durch die nachstehenden Beispiele näher erläutert.

### Beispiel 1

### a) Herstellung von Diethylphosphinsäure (als Na-Salz)

2,2 kg (20,7 Mol) Natriumhypophosphit-1-hydrat wurden in 8 kg (7,621) Essigsäure gelöst und in einem 16-L-Doppelmantel-Druckreaktor aus Stahl-Emaille vorgelegt. Nach Aufheizen der Reaktionsmischung auf 85 °C wurde über ein auf 5 bar eingestelltes Reduzierventil Ethylen bis zur Sättigung in den Reaktor eingeleitet. Die Reaktion wurde unter ständigem Rühren durch Zudosieren einer Lösung von 56 g (1 Mol%) 2,2'-Azobis (2-amidinopropan)dihydrochlorid in 250 ml Wasser gestartet und über die Radikalstarter-Dosier-Geschwindigkeit so gesteuert, daß die Reaktionstemperatur im Reaktor bei einer Manteltemperatur von 80 °C unter ständiger Zufuhr von Ethylen bei einem mittleren Druck von etwa 5 bar nicht über 95 °C stieg. Die Dosierzeit betrug insgesamt 3 Stunden. Danach ließ man noch 3 h bei 85 °C nachreagieren. Der Reaktor wurde entspannt, auf Raumtemperatur abgekühlt und der Inhalt analysiert.

| | | |
|---|---|---|
| ³¹P-NMR-Analyse | Diethylphosphinsäure-Na-Salz | 87,0 Mol% |
| | Ethylbutylphosphinsäure-Na-Salz | 11,9 Mol% |
| | Monoethylphosphinsäure-Na-Salz | 0,9 Mol% |
| | Hypophosphorige Säure-Na-Salz | 0,1 Mol% |
| | unbekannte Komponenten | 0,1 Mol% |

Die Gesamt-Auswaage betrug 11,7 kg. Dies entspricht einer Ethylen-Aufnahme von 1,2 kg (100 % der Theorie).

### b) Herstellung des Aluminiumsalzes der Diethylphosphinsäure

800 g der nach a) erhaltenen Mischung aus hauptsächlich Diethylphosphinsäure-Na-Salz wurden in 2500 ml Essigsäure gelöst und anschließend 38 g (0,48 Mol) Aluminiumhydroxid zugegeben. Dann wurde für etwa 4 Stunden unter Rückfluß erhitzt, abgekühlt und abfiltriert. Der erhaltene Feststoff wurde zuerst mit 1 Liter Eisessig, dann mit 1 Liter dest. Wasser und zuletzt mit 500 ml Aceton gewaschen, und dann bei 130 °C im Vakuum getrocknet. Ausbeute: 183 g (92 % der Theorie).

### Beispiel 2

### a) Herstellung von Diethylphosphinsäure (Na-Salz)

2,12 kg (20 Mol) Natriumhypophosphit-Monohydrat wurden in 7 kg Essigsäure gelöst und in einem 16-L-Doppelmantel Druckreaktor aus Stahl-Emaille vorgelegt. Nach Aufheizen der Reaktionsmischung auf 100°C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105°C eine Lösung von 32,8 g (1 Mol%) Azobis(isobutyronitril) (AIBN) in 500 g Essigsäure gleichmäßig zudosiert. Nach einer Nachreaktionszeit von 1 h, Entspannung des Reaktors und Abkühlung auf Raumtemperatur wurde der Inhalt analysiert:

| | | |
|---|---|---|
| ³¹P-NMR | Diethylphosphinsäure-Na-Salz | 91,3 Mol% |
| | Butylethylphosphinsäure-Na-Salz | 7,7 Mol% |
| | Ethylphosphonige Säure-Na-Salz | 0,7 Mol% |
| | Unbekannte Komponenten | 0,3 Mol% |

Die Ethylenaufnahme betrug 1160 g (100 % der Theorie)

### b) Herstellung des Aluminiumsalzes der Diethylphosphinsäure

Die nach a) erhaltene Lösung wurde mit 520 g (6,67 Mol) Aluminiumhydroxid versetzt, 4 h auf 80°C erwärmt und weitere 4 h unter Rückfluß erhitzt Anschließend wurde der erhaltene Feststoff abfiltriert, nacheinander 2 mal mit je 2 L Essigsäure und 2 L Wasser gewaschen und bei 130°C im Vakuum getrocknet. Ausbeute: 2210 g (85 % der Theorie).

### Beispiel 3

### a) Herstellung von Diethylphosphinsäure

Ein Gemisch von 2,64 kg (20 Mol) einer 50%igen wäßrigen Lösung von Hypophosphoriger Säure und 7 kg Essigsäure wurde in einem 16-L-Doppelmantel Druckreaktor aus Stahl-Emaille vorgelegt. Nach Aufheizen der Reaktionsmischung auf 100°C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105°C eine Lösung von 56 g (1 Mol%) 4,4'Azobis(4-cyano-pentansäure) in 500 g Essigsäure gleichmäßig zudosiert. Nach einer Nachreaktionszeit von 1 h, Entspannung des Reaktors und Abkühlung auf Raumtemperatur wurde der Inhalt analysiert:

| | | |
|---|---|---|
| ³¹P-NMR | Diethylphosphinsäure | 90,6 Mol% |
| | Butylethylphosphinsäure | 8,4 Mol% |
| | Ethylphosphonige Säure | 0,8 Mol% |
| | Unbekannte Komponenten | 0,2 Mol% |

Die Ethylenaufnahme betrug 1160 g (100 % der Theorie)

### b) Herstellung des Aluminiumsalzes der Diethylphosphinsäure

Die nach a) erhaltene Lösung wurde am Rotationsverdampfer weitstgehend vom Lösungsmittel Essigsäure befreit und anschließend mit 10 L Wasser versetzt. Innerhalb von einer Stunde wurden 4500 g (3,5 Mol) einer 46%-igen wäßrigen Lösung von Al₂(SO₄)₃·14 H₂O zugefügt. Anschließend wurde der erhaltene Feststoff abfiltriert, nacheinander 2 mal mit je 2 L Essigsäure und 2 L Wasser gewaschen und bei 130°C im Vakuum getrocknet Ausbeute: 2520 g (82 % der Theorie).

## Patentansprüche

1. Verfahren zur Herstellung von Salzen der Dialkylphosphinsäuren, **dadurch gekennzeichnet, daß** man
a) Alkylphosphonige und/oder Hypophosphorige Säure und/oder deren Alkalisalze mit den Olefinen Ethylen und/oder Propylen in Gegenwart einer Azoverbindung als Radikalstarter zu Dialkylphosphinsäuren und/oder deren Alkalisalzen umsetzt und
b) die nach a) erhaltenen Dialkylphosphinsäuren und/oder deren Alkalisalze mit Metallverbindungen von Mg, Ca, Al, Sb, Sn, Ge, Ti, Zn, Fe, Zr, Ce, Bi, Sr, Mn, Li, Na und/oder K zu den Dialkylphosphinsäuresalzen der Metalle umsetzt
und wobei die Umsetzungen im Schritt a) in essigsaurem Medium erfolgen.

2. Verfahren nach Anspruch 1, **dadurch gekennzeichnet, daß** es sich bei den Azo-Verbindungen um kationische und/oder nicht-kationische Azo-Verbindungen handelt.

3. Verfahren nach Anspruch 1 oder 2, **dadurch gekennzeichnet, daß** als kationische Azo-Verbindungen 2,2'-Azobis(2-amidinopropan)dihydrochlorid oder 2,2'-Azobis(N,N'-dimethylenisobutyramidin)dihydrochlorid eingesetzt werden.

4. Verfahren nach Anspruch 1 oder 2, **dadurch gekennzeichnet, daß** als nicht-kationische Azo-Verbindungen Azobis(isobutyronitril), 4,4'Azobis(4-cyanopentansäure) oder 2,2'Azobis(2-methylbutyronitril) eingesetzt werden.

5. Verfahren nach einem oder mehreren der Ansprüche 1 bis 4, **dadurch gekennzeichnet, daß** es sich bei den Metallverbindungen um Metalloxide, -hydroxide, -oxidhydroxide, -sulfate, -acetate, -nitrate, -chloride und/oder alkoxide handelt.

6. Verfahren nach einem oder mehreren der Ansprüche 1 bis 5, **dadurch gekennzeichnet, daß** es sich bei den Metallverbindungen um Aluminiumhydroxid oder um Aluminiumsulfate handelt.

7. Verfahren nach einem oder mehreren der Ansprüche 1 bis 3, **dadurch gekennzeichnet, daß** man
a) Alkalisalze der Hypophosphorigen Säure mit den Olefinen Ethylen und/oder Propylen in Gegenwart einer kationischen Azoverbindung als Radikalstarter zu den Alkalisalzen von Dialkylphosphinsäuren und
b) die nach a) erhaltenen Alkalisalze der Dialkylphosphinsäuren mit Aluminiumverbindungen zu den Dialkylphosphinsäuresalzen des Aluminiums umsetzt
und wobei die Umsetzungen im Schritt a) in essigsaurem Medium erfolgen.

8. Verfahren nach einem oder mehreren der Ansprüche 1 bis 7, **dadurch gekennzeichnet, daß** man das nach Schritt a) erhaltene Produktgemisch ohne weitere Reinigung mit den Metallverbindungen umsetzt.

9. Verfahren nach einem oder mehreren der Ansprüche 1 bis 7, **dadurch gekennzeichnet, daß** man das nach Schritt a) erhaltene Produktgemisch aufarbeitet und danach nur die nach Schritt a) erhaltenen Dialkylphosphinsäuren und/oder deren Alkalisalze mit den Metallverbindungen umsetzt.

10. Verfahren nach einem oder mehreren der Ansprüche 1 bis 9, **dadurch gekennzeichnet, daß** es sich bei der Alkylphosphonigen Säure und/oder deren Alkalisalzen um Methylphosphonige Säure oder Ethylphosphonige Säure und/oder deren Alkalisalze handelt.

11. Verfahren nach einem oder mehreren der Ansprüche 1 bis 10, **dadurch gekennzeichnet, daß** die Umsetzung im Schritt a) bei einer Temperatur von 40 bis 130 °C erfolgt.

12. Verfahren nach einem oder mehreren der Ansprüche 1 bis 11, **dadurch gekennzeichnet, daß** die Umsetzung im Schritt a) bei einer Temperatur von 70 bis 110 °C erfolgt.

13. Verfahren nach einem oder mehreren der Ansprüche 1 bis 12, **dadurch gekennzeichnet, daß** die Umsetzung im Schritt b) bei einer Temperatur von 20 bis 150 °C erfolgt.

14. Verfahren nach einem oder mehreren der Ansprüche 1 bis 13, **dadurch gekennzeichnet, daß** die Umsetzung im Schritt b) bei einer Temperatur von 80 bis 120 °C erfolgt.

## Claims

1. A process for preparing salts of dialkylphosphinic acids, which comprises
a) reacting alkylphosphonous and/or hypophosphorous acid and/or alkali metal salts thereof with the olefins ethylene and/or propylene in the presence of an azo compound as free-radical initiator to give dialkylphosphinic acids and/or alkali metal salts thereof and
b) reacting the dialkylphosphinic acids and/or alkali metal salts thereof obtained according to a) with metal compounds of Mg, Ca, Al, Sb, Sn, Ge, Ti, Zn, Fe, Zr, Ce, Bi, Sr, Mn, Li, Na and/or K to give the metal dialkylphosphinate salts, and the reactions in step a) being carried out in an acetic acid medium.

2. The process as claimed in claim 1, wherein the azo compounds are cationic and/or non-cationic azo compounds.

3. The process as claimed in claim 1 or 2, wherein, as cationic azo compounds, use is made of 2,2'-azobis(2-amidinopropane) dihydrochloride or 2,2'-azobis(N,N'-dimethyleneisobutyramidine) dihydrochloride.

4. The process as claimed in claim 1 or 2, wherein, as non-cationic azo compounds, use is made of azobis(isobutyronitrile), 4,4'-azobis(4-cyanopentanoic acid) or 2,2'-azobis(2-methylbutyronitrile).

5. The process as claimed in one or more of claims 1 to 4, wherein the metal compounds are metal oxides, metal hydroxides, metal hydroxide oxides, metal sulfates, metal acetates, metal nitrates, metal chlorides and/or metal alkoxides.

6. The process as claimed in one or more of claims 1 to 5, wherein the metal compounds are aluminum hydroxide or aluminum sulfates.

7. The process as claimed in one or more of claims 1 to 3, wherein
a) alkali metal salts of hypophosphorous acid are reacted with the olefins ethylene and/or propylene in the presence of a cationic azo compound as free-radical initiator to give the alkali metal dialkylphosphinates and
b) the alkali metal dialkylphosphinates obtained according to a) are reacted with aluminum compounds to give the aluminum dialkylphosphinate salts, and the reactions in step a) being carried out in an acetic acid medium.

8. The process as claimed in one or more of claims 1 to 7, wherein the product mixture obtained according to step a) is reacted with the metal compounds without further purification.

9. The process as claimed in one or more of claims 1 to 7, wherein the product mixture obtained according to step a) is worked up and thereafter only the dialkylphosphinic acids and/or alkali metal salts thereof obtained according to step a) are reacted with the metal compounds.

10. The process as claimed in one or more of claims 1 to 9, wherein the alkylphosphonous acid and/or alkali metal salts thereof are methylphosphonous acid or ethylphosphonous acid and/or alkali metal salts thereof.

11. The process as claimed in one or more of claims 1 to 10, wherein the reaction in step a) is carried out at a temperature of from 40 to 130°C.

12. The process as claimed in one or more of claims 1 to 11, wherein the reaction in step a) is carried out at a temperature of from 70 to 110°C.

13. The process as claimed in one or more of claims 1 to 12, wherein the reaction in step b) is carried out at a temperature of from 20 to 150°C.

14. The process as claimed in one or more of claims 1 to 13, wherein the reaction in step b) is carried out at a temperature of from 80 to 120°C.

## Revendications

1. Procédé pour la préparation de sels des acides dialkylphosphiniques, **caractérisé en ce qu'**on
a) met à réagir un acide alkylphosphoneux et/ou hypophosphoreux et/ou leurs sels de métaux alcalins avec les oléfines éthylène et/ou propylène en présence d'un composé azoïque comme amorceur radicalaire pour obtenir des acides dialkylphosphiniques et/ou leurs sels de métaux alcalins et
b) on met à réagir les acides dialkylphosphiniques et/ou leurs sels de métaux alcalins obtenus selon a) avec des composés métalliques de Mg, Ca, Al, Sb, Sn, Ge, Ti, Zn, Fe, Zr, Ce, Bi, Sr, Mn, Li, Na et/ou K pour obtenir les sels d'acide dialkylphosphinique des métaux,
et dans lequel on réalise les réactions de l'étape a) en milieu acide acétique.

2. Procédé selon la revendication 1, **caractérisé en ce qu'**il s'agit pour les composés azoïques de composés azoïques cationiques et/ou non cationiques.

3. Procédé selon la revendication 1 ou 2, **caractérisé en ce qu'**on utilise comme composés azoïques cationiques le 2,2'-azobis(2-amidinopropane)dichlorhydrate ou le 2,2'-azobis(N,N'-diméthylènisobutyramidine)dichlorhydrate.

4. Procédé selon la revendication 1 ou 2, **caractérisé en ce qu'**on utilise comme composés azoïques non cationiques l'azobis(isobutyronitrile), le 4,4'-azobis(acide 4-cyanopentanoïque) ou le 2,2'-azobis(2-méthylbutyronitrile).

5. Procédé selon une ou plusieurs des revendications 1 à 4, **caractérisé en ce qu'**il s'agit pour les composés métalliques de d'oxydes, d'hydroxydes, d'oxyde-hydroxydes, de sulfates, d'acétates, de nitrates, de chlorures et/ou d'alcoxydes de métaux.

6. Procédé selon une ou plusieurs des revendications 1 à 5, **caractérisé en ce qu'**il s'agit pour les composés métalliques d'hydroxyde d'aluminium ou de sulfates d'aluminium.

7. Procédé selon une ou plusieurs des revendications 1 à 3, **caractérisé en ce qu'**on met à réagir
a) des sels de métaux alcalins de l'acide hypophosphoreux avec les oléfines éthylène et/ou propylène en présence d'un composé azoïque comme amorceur radicalaire pour obtenir des sels de métaux alcalins d'acides dialkylphosphiniques et
b) les sels de métaux alcalins des acides dialkylphosphiniques obtenus selon a) avec des composés de l'aluminium pour obtenir les sels d'acide dialkylphosphinique de l'aluminium,
et dans lequel on réalise les réactions de l'étape a) en milieu acide acétique.

8. Procédé selon une ou plusieurs des revendications 1 à 7, **caractérisé en ce qu'**on met à réagir le mélange de produits obtenu après l'étape a) sans autre purification avec les composés métalliques.

9. Procédé selon une ou plusieurs des revendications 1 à 7, **caractérisé en ce qu'**on traite le mélange de produits obtenu après l'étape a) et on met à réagir seulement ensuite les acides dialkylphosphiniques et/ou leurs sels de métaux alcalins obtenus après l'étape a) avec les composés métalliques.

10. Procédé selon une ou plusieurs des revendications 1 à 9, **caractérisé en ce qu'**il s'agit pour l'acide alkylphosphoneux et/ou de ses sels de métaux alcalins d'acide méthylphosphoneux ou d'acide éthylphosphoneux et/ou de leurs sels de métaux alcalins.

11. Procédé selon une ou plusieurs des revendications 1 à 10, **caractérisé en ce qu'**on réalise la réaction à l'étape a) à une température de 40 à 130 °C.

12. Procédé selon une ou plusieurs des revendications 1 à 11, **caractérisé en ce qu'**on réalise la réaction à l'étape a) à une température de 70 à 110 °C.

13. Procédé selon une ou plusieurs des revendications 1 à 12, **caractérisé en ce qu'**on réalise la réaction à l'étape b) à une température de 20 à 150 °C.

14. Procédé selon une ou plusieurs des revendications 1 à 13, **caractérisé en ce qu'**on réalise la réaction à l'étape b) à une température de 80 à 120 °C.
